# EUROPEAN PATENT SPECIFICATION

(11) **EP 3 079 308 B1**
(45) Date of publication and mention of the grant of the patent: **16.01.2019**
(21) Application number: 14868025.9
(22) Date of filing: 08.08.2014
(51) Int. Cl.: H04L 12/28, H04W 72/04, H04W 74/00, H04W 72/12, H04W 72/10

(54) **COMMUNICATION PROCESSING METHOD AND APPARATUS FOR WIRELESS NETWORK**
KOMMUNIKATIONSVERARBEITUNGSVERFAHREN UND -VORRICHTUNG FÜR DRAHTLOSE NETZWERKE
PROCÉDÉ ET APPAREIL DE TRAITEMENT DE COMMUNICATIONS POUR RÉSEAU SANS FIL

(30) Priority: 02.12.2013 CN 201310634905
(43) Date of publication of application: 12.10.2016
(73) Proprietor: ZTE Corporation, Guangdong Province 518057 (CN)
(72) Inventor: XING, Weimin, Shenzhen Guangdong Province 518057 (CN); TIAN, Kaibo, Shenzhen Guangdong Province 518057 (CN); SUN, Bo, Shenzhen Guangdong Province 518057 (CN)
(74) Representative: Novagraaf Technologies
(86) International application number: PCT/CN2014/084033
(87) International publication number: WO 2015/081718

(56) References cited:
- WO-A1-2015/081169
- CN-A- 1 885 808
- CN-A- 101 159 648
- CN-A- 101 317 477
- CN-A- 101 494 597
- CN-A- 102 413 580
- US-A1- 2005 025 176
- US-A1- 2007 032 255
- US-A1- 2010 074 263
- US-A1- 2011 292 919

## Description

### Technical Field

The disclosure relates to the field of mobile communications, and in particular to a method and an apparatus for communication processing in a wireless network.

### Background

At present, with the growth of user needs, an increasing demand is put forward on the transmission rate of Wireless Local Area Network (WLAN) or Wireless Personal Area Network Communication Technologies (WPAN); in order to meet such requirement, Institute of Electrical and Electronics Engineers (IEEE) sets up a special task group to realize high-speed data rate. The wireless spectrum used by IEEE standards not only includes traditional 2.4GHz, 5GHz, 1GHz and lower frequency bands, but also includes 60GHz, 45GHz and other millimetre-wave frequency bands

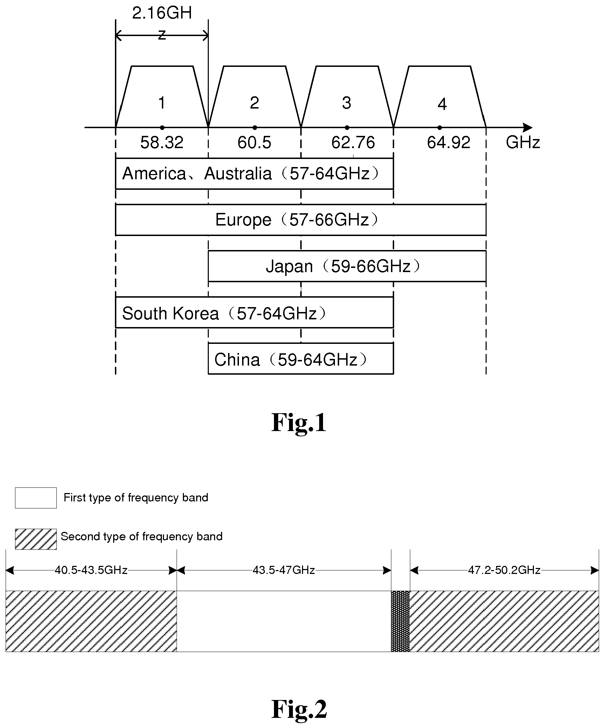

Generally, a wireless network consists of a master node and multiple subnodes; specifically, the master node might be a well-known base station, an Access Point (AP), a Piconet Coordinator (PNC) and other devices, the subnodes might be a terminal User Equipment (UE), a wireless station and other devices. In a millimetre-wave WLAN, a central node Access Point, which is called AP/Personal Basic Service Set (PBSS) Control point) (PCP), and multiple associated Stations (STAs) compose a Basic Service Set (BSS). Present millimetre-wave WLAN works on a 60GHz frequency band and the channel division is as shown in Fig. 1; the BSS will select a channel in Fig. 1 to work, this channelization scheme supports one channel bandwidth only, and both management control signalling and data of the BSS are transmitted on the selected channel. In present wireless network, medium access control includes two modes based on contention and scheduling respectively, which are comprehensively used to perform medium access control in present millimetre-wave WLAN standards, for example, the AP/PCP establishes a BSS on a channel (of which the bandwidth is fixed to 2.16GHz) on the 60GHz frequency band; through the transmission of Beacon or Announcement frame and other signalling on this channel at a predetermined time, one period of time can be set as a Contention-Based Access Period (CBAP), in which stations can contend a channel to transmit data through a Carrier Sense Multiple Access with Collision Avoidance (CSMA/CA) mechanism, or, a period of time can be set as a special Service Period (SP) without contention, in which special stations are allowed to transmit data while other stations are not allowed to access the channel. The data transmission mentioned above might be between stations or between a station and the PCP/AP.

In order to promote the use of millimetre-wave technology and to meet the requirement of users on data rate, the millimetre-wave technology introduces a new band, as shown in Fig. 2. The channel division of the new millimetre-wave band has new features, namely, variable channel bandwidth, for example, each channel has a fixed bandwidth originally while new frequency-band channel bandwidth has at least two options, and two types of frequency bands, in which the first type of frequency band mainly is used for wireless near field WLAN/WPAN applications and the second type of frequency band mainly is used for long-range wireless backhaul or relay network; actually, the WLAN/WPAN also can use the second type of frequency band without interfering the backhaul or relay network. Thus, it can be seen that dividing channel resource based on a fixed bandwidth according to time in related art cannot realize a flexible bandwidth operation for the resource division method of the new frequency band, nor distinguish the different frequency band types of the new frequency band. In addition, the channel utilization of the present access control method is to be improved, for example, in a case that an AP/PCP allocates an SP for an STA1 to transmit data to an STA2, if the allocation signalling of the AP/PCP is not correctly received by STA1 or STA2, then the SP will not be used by other stations despite not used by STA1 and STA2.

In view of the problem in present millimetre-wave channel use method and medium access control method in related art that frequency band types of channels are indistinguishable, no definition is provided in terms of bandwidth operations and channel utilization is low, no solution has been put forward.

Document US 20070032255A1 provides a related technical solution; however, the above mentioned problem still remains unsolved.

### Summary

The disclosure provides a method and an apparatus for communication processing in a wireless network, to at least solve the problem in related art that frequency band types of channels are indistinguishable, no definition is provided in terms of bandwidth operations and channel utilization is low.

In order to achieve the above purpose, according to an embodiment of the disclosure, the present invention is defined by independent claims, to which reference should now be made. Further enhancements are characterized by the dependent claims.

An embodiment of the disclosure, further includes: an access process is performed by adopting different backoff time according to the priority of users corresponding to the channel resource.

In an embodiment of the disclosure, an access process is performed by adopting different backoff time according to the priority of users corresponding to the channel resource includes: among the users corresponding to the channel resource, the access process is performed by adopting a first backoff time for users with a highest priority, and the access process is performed by adopting a second backoff time for users with a priority other than the highest priority, wherein the second backoff time is not less than the first backoff time.

In an embodiment of the disclosure, the channel access backoff policy includes at least one of the following: backoff time setting, contention access window setting.

In an embodiment of the disclosure, the frequency band type includes at least one of the following: first frequency band of the channel resource, second frequency band of the channel resource, third frequency band of the channel resource.

In an embodiment of the disclosure, the first frequency band is the main frequency band in the operating frequency bands of the wireless network, the second frequency band is the auxiliary frequency band in the operating frequency bands of the wireless network.

In an embodiment of the disclosure, the third frequency band is one other than the operating frequency bands of the wireless network.

In an embodiment of the disclosure, the above method further includes: in a case that the frequency band type is the first frequency band, the master node or the subnodes performs an access on the channel resource adopting a third backoff time; in a case that the frequency band type is the second frequency band, the master node or the subnodes performs the access process on the channel resource by adopting the fourth backoff time, wherein the fourth backoff time is not less than the third backoff time.

An embodiment of the disclosure, further includes: in a case that the frequency band type is the third frequency band, the master node or the subnodes performs access on the channel resource adopting the fifth backoff time, wherein the fifth backoff time is not less than the fourth backoff time.

With the disclosure, channel allocation information is acquired in advance through a master node of a wireless network and the channel allocation information is sent from the master node to subnodes on a first frequency band. Thus, problems in related art that frequency band types of channels are indistinguishable, no definition is provided in terms of bandwidth operations and channel utilization is low are solved. It is further achieved that different operations may be implemented on different frequency bands in a wireless network and a variable communication bandwidth is supported, which is beneficial for full use of channels and avoids mutual interference.

### Brief Description of the Drawings

For a better understanding of the disclosure, accompanying drawings described hereinafter are provided to constitute one part of the application; the schematic embodiments of the disclosure and the description thereof are used to illustrate the disclosure but to limit the disclosure improperly. In the accompanying drawings:
Fig. 1 is a channel division diagram in a case that a millimeter-wave WLAN works on 60GHz in related art;
Fig. 2 is a channel division diagram of the new band of millimeter wave in related art;
Fig. 3 is a flowchart of a method for communication processing in a wireless network according to the embodiment of the disclosure;
Fig. 4 is another flowchart of a method for communication in a wireless network according to the embodiment of the disclosure;
Fig. 5 is a structure diagram of an apparatus for communication processing in a wireless network according to the embodiment of the disclosure;
Fig. 6 is another structure diagram of an apparatus for communication in a wireless network according to the embodiment of the disclosure;
Fig. 7 is a channel allocation diagram for the communication processing of a wireless network according to the preferred embodiment of the disclosure; and
Fig. 8 is another channel allocation diagram for the communication processing of a wireless network according to the preferred embodiment of the disclosure;

### Detailed Description of the Embodiments

The disclosure is described below in detail by reference to the accompanying drawings in conjunction with embodiments. It should be noted that the embodiments in the application and the characteristics of the embodiments can be combined if no conflict is caused.

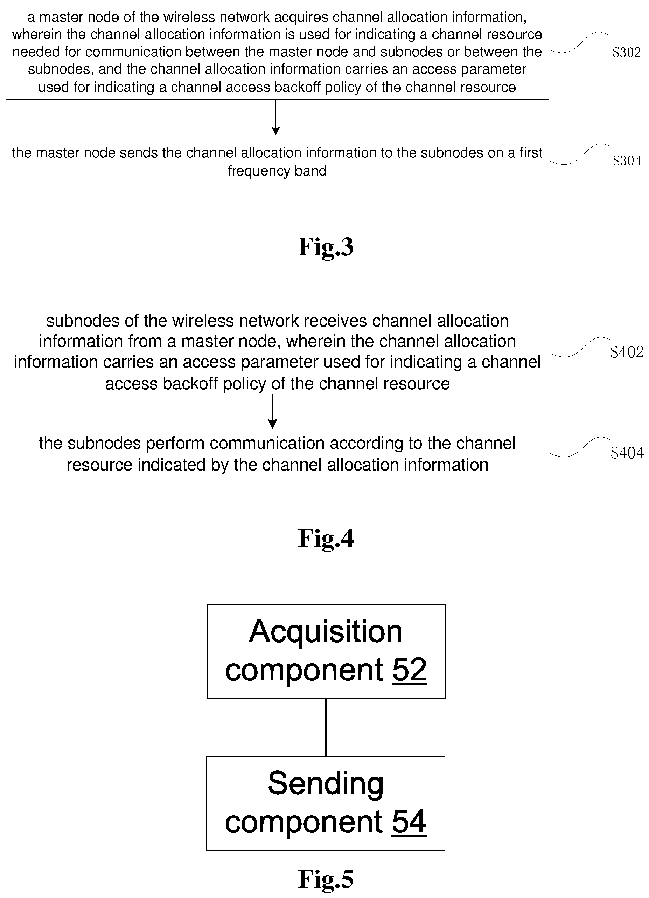

Fig. 3 is a flowchart of a method for communication processing in a wireless network according to the embodiment of the disclosure; as shown in Fig.3, the method includes: S302 to S304.

S302: a master node of the wireless network acquires channel allocation information, wherein the channel allocation information is used for indicating a channel resource needed for communication between the master node and subnodes or between the subnodes, and the channel allocation information carries an access parameter used for indicating a channel access backoff policy of the channel resource.

In S302, there are several ways to acquire the channel allocation information, for example, the channel allocation information can be configured in advance, the channel allocation information can be constructed locally (that is, on the master node), or the channel allocation information can be acquired from a third-party device.

The above access parameter includes at least one of the following: frequency band type of channel, priority of users corresponding to the channel resource, channel access backoff policy. Specifically, access is performed adopting different backoff time according to the priority of users corresponding to the channel resource. Among the users corresponding to the channel resource, access is performed adopting a first backoff time users with a highest priority, and access is performed adopting a second backoff time for users with a priority other than the highest priority, wherein the second backoff time is not less than the first backoff time. Within the backoff time, the master node or subnodes monitors the channel.

Specifically, the channel access backoff policy includes at least one of the following: backoff time setting, contention access window setting. The frequency band type includes at least one of the following: first frequency band of the channel resource, second frequency band of the channel resource, third frequency band of the channel resource. The first frequency band, the second frequency band and the third frequency band occupy different frequency bands respectively; the first frequency band is the main frequency band in the operating frequency bands of the wireless network, the second frequency band is the auxiliary frequency band in the operating frequency bands of the wireless network, the third frequency band is one other than the operating frequency bands of the wireless network.

In a case that the frequency band type is the first frequency band, the master node or the subnodes performs access on the channel resource adopting the third backoff time; in a case that the frequency band type is the second frequency band, the master node or the subnodes performs access on the channel resource adopting the fourth backoff time, wherein the fourth backoff time is not less than the third backoff time. Within the backoff time, the master node or subnodes monitors the channel.

In a case that the frequency band type is the third frequency band, the master node or the subnodes performs access on the channel resource adopting the fifth backoff time, wherein the fifth backoff time is not less than the fourth backoff time.

S304: the master node sends the channel allocation information to the subnodes on a first frequency band.

In this embodiment, the master node and the subnodes compose a wireless network; the master node sends management signalling including one or more pieces of channel allocation information on a subscribed first frequency band, wherein the channel allocation information determines or indicates a channel resource and/or the channel access parameter of the channel resource, the subnodes performs communication with other subnodes or with the master node on the channel resource corresponding to the channel allocation information.

It should be noted that the above channel allocation information can determine a user or indicate user identification; in a case that the channel allocation information indicates or determines that it contains or equals the identification of the subnodes or the master node, that is, the subnodes or the master node are the user of the channel resource corresponding to the channel allocation information, the subnodes or the master node performs communication on the channel resource corresponding to the channel allocation information.

Wherein the channel allocation information further carries at least one of the following: frequency of the channel resource, maximum width limit of the frequency band occupied by the channel resource, starting-ending time limit of the channel resource.

Through the above steps, channel allocation information is acquired in advance through a master node of the wireless network and the channel allocation information is sent from the master node to subnodes on a first frequency band. Thus, problems in related art that frequency band types of channels are indistinguishable, no definition is provided in terms of bandwidth operations and channel utilization is low are solved. It is further achieved that different operations may be implemented on different frequency bands in a wireless network and a variable communication bandwidth is supported, which is beneficial for full use of channels and avoids mutual interference.

Fig. 4 is another flowchart of a method for communication in a wireless network according to the embodiment of the disclosure; this process is described from the subnodes side. As shown in Fig. 4, the method includes S402 to S404.

S402: subnodes of the wireless network receives channel allocation information from a master node, wherein the channel allocation information carries an access parameter used for indicating a channel access backoff policy of the channel resource.

In S402, the access parameter includes at least one of the following: frequency band type of channel, priority of users corresponding to the channel resource, channel access backoff policy.

S404: the subnodes perform communication according to the channel resource indicated by the channel allocation information.

Through the above steps, the subnodes perform communication according to the channel resource indicated by the channel allocation information received from the master node. With the above technical scheme, problems in related art that frequency band types of channels are indistinguishable, no definition is provided in terms of bandwidth operations and channel utilization is low are solved. It is further achieved that different operations may be implemented on different frequency bands in a wireless network and a variable communication bandwidth is supported, which is beneficial for full use of channels and avoids mutual interference.

This embodiment also provides a communication apparatus for a wireless network, which is configured to implement the above embodiment and preferred implementations; those described above are not further addressed below; and components involved in the apparatus are described below. The term "component" referred below can realize the combination of software and/or hardware with predefined functions. Although the apparatus described in the following embodiments preferably is realized in the form of software, hardware or the combination of software and hardware is possible and can be conceived to realize the apparatus. Fig. 5 is a structure diagram of an apparatus for communication processing in a wireless network according to the embodiment of the disclosure; as shown in Fig. 5, the apparatus includes:
an acquisition component 52, which is configured to acquire channel allocation information, wherein the channel allocation information is used for indicating a channel resource needed for communication between a master node and subnodes or between the subnodes, and the channel allocation information carries an access parameter used for indicating a channel access backoff policy of the channel resource, and
the acquisition component 52 is configured to acquire the channel allocation information in a case that the access parameter includes at least one of the following: frequency band type of channel, priority of users corresponding to the channel resource, channel access backoff policy;
a sending component 54, which is connected with the acquisition component 52 and is configured to send the channel allocation information to the subnodes on a first frequency band.

By the action of the acquisition component 52 and the sending component 54, the acquisition component 52 acquires the channel allocation information in advance through the master node of the wireless network and then the sending component 54 sends the channel allocation information to the subnodes from the master node on a first frequency band. With the above technical scheme, problems in related art that frequency band types of channels are indistinguishable, no definition is provided in terms of bandwidth operations and channel utilization is low are solved. It is further achieved that different operations may be implemented on different frequency bands in a wireless network and a variable communication bandwidth is supported, which is beneficial for full use of channels and avoids mutual interference.

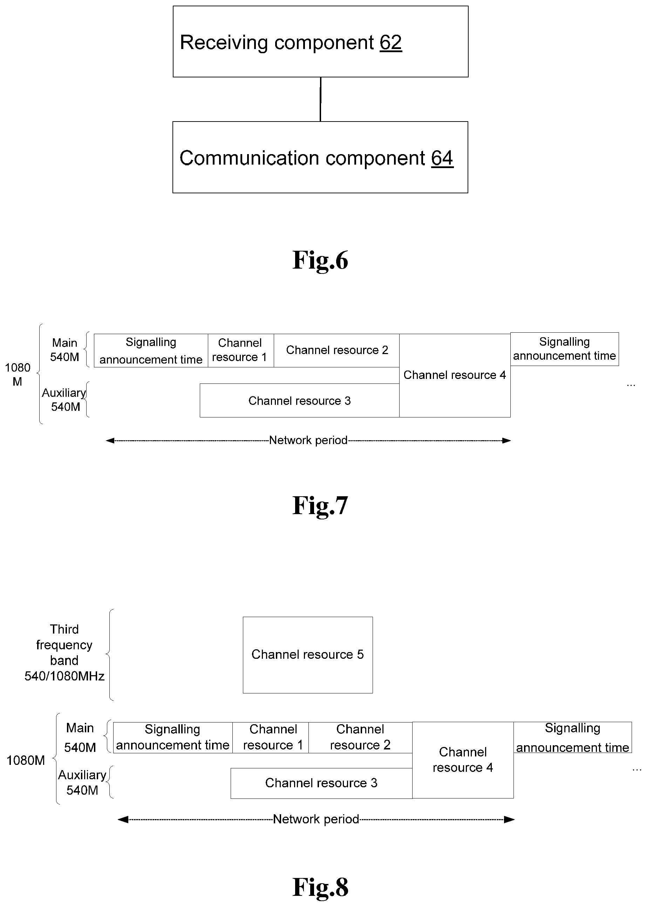

Fig. 6 is another structure diagram of an apparatus for communication in a wireless network according to the embodiment of the disclosure; as shown in Fig. 6, the apparatus includes:
a receiving component 62, which is configured to receive channel allocation information from a master node, wherein the channel allocation information carries an access parameter used for indicating a channel access backoff policy of the channel resource, and
the receiving component 62 is configured to receive the channel allocation information in a case that the access parameter includes at least one of the following: frequency band type of channel, priority of users corresponding to the channel resource, channel access backoff policy;
a communication component 64, which is configured to perform communication according to the channel resource indicated by the channel allocation information.

By the combined action of the receiving component 62 and the communication component 64, on the childe node side, in the communication component 64 the subnodes perform communication according to the channel resource indicated by the channel allocation information received from the master node by the receiving component 62. With the above technical scheme, problems in related art that frequency band types of channels are indistinguishable, no definition is provided in terms of bandwidth operations and channel utilization is low are solved. It is further achieved that different operations may be implemented on different frequency bands in a wireless network and a variable communication bandwidth is supported, which is beneficial for full use of channels and avoids mutual interference.

In order to make the above embodiments better understood, a detailed description is provided below in conjunction with preferred embodiment and relevant accompanying drawings.

### Example 1

Central node AP/PCP and stations compose a wireless network, of which the operating bandwidth is 1080MHz; a 540MHz-channel of the 1080MHz-channel is taken as a main channel (first frequency band), while the other 540MHz-channel is taken as an auxiliary channel (second frequency band). The determination or selection rules of the main channel are predefined by a protocol. In this embodiment, supposing the upper 540MHz is the selected main channel, as shown in Fig. 7.

The PCP/AP sends unicast or broadcast wireless frames in the signalling announcement time; the frame includes the information domain or information element of multiple channel allocations; one channel allocation corresponds to one channel resource, for example, Channel Allocation 1 and Channel Allocation 2 correspond to Channel Resource 1 and Channel Resource 2 on the main channel respectively, Channel Allocation 3 corresponds to Channel Resource 3 on the auxiliary channel, Channel Allocation 4 corresponds to Channel Resource 4 on the main channel and the auxiliary channel. The maximum-bandwidth, frequency and starting-ending time of the channel resource above are acquired through the channel resource parameter determined or indicated by channel allocation.

Each piece of channel allocation information indicates the user identification of the channel resource corresponding to the channel allocation, for example, Channel Allocation 1 indicates the identification of STA1 and STA2, that is to say, STA1 adopts Channel Resource 1 to send data, and STA2 receives the data; Channel Allocation 2 can allocate Channel Resource 2 to PCP/AP and STA3; Channel Allocation 4 can allocate Channel Resource 4 to a group of stations or all stations for free contention, that is, user identification can be specified as a specific value to represent all stations or a group of stations.

In addition, channel allocation information also can indicate the channel priority of a user; the priority defines the minimum time of backoff detection for each user station in a case that the channel resource is opened, for example, if the channel allocation information indicates the identification of STA1 and that the priority is the first priority, then STA1 performs channel access immediately in a case that the corresponding channel resource is opened, that is, the minimum time is 0; if the channel allocation information indicates the identification of STA3 and that the priority is not the first priority, then STA3 backs off a minimum time predefined by the detection protocol in a case that the corresponding channel resource is opened, if the channel is not occupied within the time, STA3 starts accessing the channel; the minimum time above varies according to different priorities. STA1 and STA3 can correspond to one same channel resource, that is, the PCP/AP allocates Channel Resource 1 to STA1 and STA3 simultaneously; sine STA1 has a higher priority, if STA1 has used Channel Resource 1, then STA3 detects a frame switch (frame switch might be a trigger frame sent by STA1 or a response frame sent by a responding side for STA1) initiated by STA1 during the minimum time, thus STA3 cannot use Channel Resource 1. If STA1 does not use Channel Resource 1, or STA1 has used Channel Resource 1 but STA3 does not detect the frame switch initiated by STA1 due to spatial orthogonality, then STA3 can use Channel Resource 1.

The PCP/AP or STA performs communications on the corresponding channel resource according to channel allocation information; the user of each channel resource performs backoff access according to the user priority parameter determined or indicated by channel allocation; the used time and frequency band is the time and frequency indicated by channel allocation, and the used bandwidth is not greater than the indicated maximum bandwidth.

### Example 2

Central node AP/PCP and stations compose a wireless network, of which the operating bandwidth is 1080MHz; a 540MHz-channel of the 1080MHz-channel is taken as a main channel, while the other 540MHz-channel is taken as an auxiliary channel. The determination or selection rules of the main channel are predefined by a protocol. In this embodiment, supposing the upper 540MHz is the selected main channel, as shown in Fig. 7.

The PCP/AP sends unicast or multicast wireless frames in the signalling announcement time; the wireless frame includes the information domain or information element of one or more channel allocations; one channel allocation corresponds to one channel resource.

The user of Channel Resource 1 of Channel Allocation 1 is STA1 and PCP/AP, wherein STA1 sends data while the PCP/AP receives the data. Channel allocation indicates a channel access backoff policy, which can determine or indicate the minimum time of channel detection, the contention window defined by existing WLAN, the used inter-frame interval and other backoff access parameters.

The user of Channel Resource 2 corresponding to Channel Allocation 2 might be a group of users, who contends to access Channel Resource 2 according to the channel access backoff policy indicated by channel allocation.

The PCP/AP or STA performs communications on the corresponding channel resource according to channel allocation information; the user of each channel resource performs backoff access according to the user priority parameter determined or indicated by channel allocation; the used time and frequency band is the time and frequency indicated by channel allocation, and the used bandwidth is not greater than the indicated maximum bandwidth.

### Example 3

Central node AP/PCP and stations compose a wireless network, of which the operating bandwidth is 1080MHz; a 540MHz-channel of the 1080MHz-channel is taken as a main channel, while the other 540MHz-channel is taken as an auxiliary channel. The determination or selection rules of the main channel are predefined by a protocol. In this embodiment, supposing the upper 540MHz is the selected main channel; in addition, the AP/PCP also can allocate a frequency band other than the operating frequency band, that is, a third frequency band, as shown in Fig. 8.

The PCP/AP sends unicast or multicast wireless frames in the signalling announcement time; the wireless frame includes the information domain or information element of one or more channel allocations; one channel allocation corresponds to one channel resource. The frequency band of Channel Resource 5 corresponding to Channel Allocation 5 is located outside the operating network of the wireless network.

The user of Channel Resource 5 corresponding to Channel Allocation 5 is STA1 and STA2, that is, STA1 sends data while STA2 receives the data, and channel allocation determines or indicates that the channel type is a third frequency band, it is indicated that this frequency probably is a frequency band used by other wireless networks, then STA1 must monitor the channel in the third frequency band before using Channel Resource 5, specifically, the time to monitor channel should not be less than the minimum monitoring time regulated by the protocol.

### Example 4

If channel allocation information carries multiple channel access parameters, such as priority and frequency band type, the corresponding user should meet all the access requirements, for example, if the priority requires a minimum monitoring time of t1 while the frequency band type requires a monitoring time of t2, t2 being greater than t1, then the minimum monitoring time of the user should select the bigger one, that is t2.

To sum up, the above technical scheme provided by the embodiment of the disclosure achieves the following effects: problems in related art that frequency band types of channels are indistinguishable, no definition is provided in terms of bandwidth operations and channel utilization is low are solved. It is further achieved that different operations may be implemented on different frequency bands in a wireless network and a variable communication bandwidth is supported, which is beneficial for full use of channels and avoids mutual interference.

Obviously, those skilled in the art should understand that the components or steps described above can be implemented by a common computer device; the components or steps can be integrated on a single computing device or distributed on a network composed of a plurality of computing devices; optionally, the components or steps can be implemented by a programming code executable by a computing device, thus they can be stored in a storage device to be executed by a computing device and executed in a different order in some cases, or manufactured into individual integrated circuit component respectively, or several of them can be manufactured into a single integrated circuit component to implement; in this way, the disclosure is not limited to any combination of specific hardware and software.

## Claims

1. A method for communication processing in a wireless network, comprising:
acquiring, by a master node of the wireless network, channel allocation information, wherein the channel allocation information is used for indicating a channel resource needed for communication between the master node and subnodes or between the subnodes, the channel allocation information carries an access parameter, and the access parameter is used for indicating a channel access backoff policy of the channel resource (S302); and
sending, by the master node, the channel allocation information to the subnodes on a first frequency band (S304);
the access parameter also comprises a frequency band type of the channel resource;
the channel allocation information is further used for indicating identification of the master node and the subnodes, or used for indicating identification of the subnodes, wherein the identification is used for determining which one between the master node or the subnodes are user of the channel resource corresponding to the channel allocation information so as to perform the communication between the master node and the subnodes or between the subnodes on the channel resource;
wherein the channel access backoff policy comprises at least one of the following: backoff time setting, contention access window setting.

2. The method as claimed in claim 1, wherein the access parameter further comprises:
priorities of users corresponding to the channel resource.

3. The method as claimed in claim 2, further comprising:
performing an access process by adopting different backoff time according to the priorities of the users corresponding to the channel resource.

4. The method as claimed in claim 3, wherein performing the access process by adopting different backoff time according to the priority of the users corresponding to the channel resource comprises:
among the users corresponding to the channel resource, performing the access process by adopting a first backoff time for users with a highest priority, and performing the access process by adopting a second backoff time for users with a priority other than the highest priority, wherein the second backoff time is not less than the first backoff time.

5. The method as claimed in claim 2,
wherein the frequency band type comprises at least one of the following: the first frequency band of the channel resource, a second frequency band of the channel resource, a third frequency band of the channel resource;
wherein the first frequency band is a main frequency band in operating frequency bands of the wireless network, the second frequency band is an auxiliary frequency band in the operating frequency bands of the wireless network; and
wherein the third frequency band is one other than the operating frequency bands of the wireless network.

6. The method as claimed in claim 5, further comprising:
in a case that the frequency band type is the first frequency band, performing an accessing process, by the master node or the subnodes, on the channel resource by adopting a third backoff time; in a case that the frequency band type is the second frequency band, performing an accessing process, by the master node or the subnodes, on the channel resource by adopting a fourth backoff time, wherein the fourth backoff time is not less than the third backoff time.

7. The method as claimed in claim 6, further comprising:
in a case that the frequency band type is the third frequency band, performing the access process, by the master node or the subnodes, on the channel resource by adopting a fifth backoff time, wherein the fifth backoff time is not less than the fourth backoff time.

8. A method for communication in a wireless network, comprising:
receiving, by subnodes of the wireless network, channel allocation information from a master node on a first frequency band, wherein the channel allocation information is used for indicating a channel resource needed for communication between the master node and the subnodes or between the subnodes, the channel allocation information carries an access parameter, and the access parameter is used for indicating a channel access backoff policy of the channel resource (S402);
performing the communication, by the subnodes, according to the channel resource indicated by the channel allocation information (S404);
the access parameter also comprises a frequency band type of the channel resource
the channel allocation information is further used for indicating identification of the master node and the subnodes, or used for indicating identification of the subnodes, wherein the identification is used for determining which one between the master node or the subnodes are user of the channel resource corresponding to the channel allocation information so as to perform the communication between the master node and the subnodes or between the subnodes on the channel resource;
wherein the channel access backoff policy comprises at least one of the following: backoff time setting, contention access window setting.

9. The method as claimed in claim 8, wherein the access parameter further comprises:
priority of users corresponding to the channel resource.

10. An apparatus for communication processing in a wireless network, which is applied to a master node of the wireless network, comprising:
an acquisition component (52), which is configured to acquire channel allocation information, wherein the channel allocation information is used for indicating a channel resource needed for communication between the master node and subnodes or between the subnodes, and the channel allocation information carries an access parameter used for indicating a channel access backoff policy of the channel resource (S302); and
a sending component (54), which is configured to send the channel allocation information to the subnodes on a first frequency band (S304);
the access parameter also comprises a frequency band type of the channel resource;
the channel allocation information is further used for indicating identification of the master node and the subnodes, or used for indicating identification of the subnodes, wherein the identification is used for determining which one between the master node or the subnodes are user of the channel resource corresponding to the channel allocation information so as to perform the communication between the master node and the subnodes or between the subnodes on the channel resource;
wherein the channel access backoff policy comprises at least one of the following: backoff time setting, contention access window setting.

11. The apparatus as claimed in claim 10, wherein the acquisition component (52) is configured to acquire the channel allocation information in a case that the access parameter further comprises:
priority of users corresponding to the channel resource.

12. A communication apparatus for a wireless network, which is applied to subnodes of the wireless network, comprising:
a receiving component (62), which is configured to receive channel allocation information from a master node on a first frequency band, wherein the channel allocation information is used for indicating a channel resource needed for communication between the master node and the subnodes or between the subnodes, the channel allocation information carries an access parameter used for indicating a channel access backoff policy of the channel resource (S402);
a communication component (64), which is configured to perform the communication according to the channel resource indicated by the channel allocation information (S404);
the access parameter also comprises a frequency band type of the channel resource;
the channel allocation information is further used for indicating identification of the master node and the subnodes, or used for indicating identification of the subnodes, wherein the identification is used for determining which one between the master node or the subnodes are user of the channel resource corresponding to the channel allocation information so as to perform the communication between the master node and the subnodes or between the subnodes on the channel resource;
wherein the channel access backoff policy comprises at least one of the following: backoff time setting, contention access window setting.

13. The apparatus as claimed in claim 12, wherein the receiving component (62) is configured to receive the channel allocation information in a case that the access parameter further comprises:
priority of users corresponding to the channel resource.

## Patentansprüche

1. Verfahren zur Kommunikationsverarbeitung in einem drahtlosen Netzwerk, umfassend:
Erfassen, durch einen Masterknoten des drahtlosen Netzwerks, von Kanalzuteilungsinformationen, wobei die Kanalzuteilungsinformationen dafür verwendet werden, eine Kanalressource anzugeben, die für Kommunikation zwischen dem Masterknoten und Unterknoten oder zwischen den Unterknoten benötigt wird, die Kanalzuteilungsinformationen einen Zugriffsparameter übermitteln, und der Zugriffsparameter dafür verwendet wird, eine Kanalzugriffs-Backoff-Richtlinie der Kanalressource anzugeben (S302); und
Senden, durch den Masterknoten, der Kanalzuteilungsinformationen an die Unterknoten auf einem ersten Frequenzband (S304);
der Zugriffsparameter ebenfalls einen Frequenzbandtyp der Kanalressource umfasst;
die Kanalzuteilungsinformationen weiter dafür verwendet werden, Identifikation des Masterknotens und der Unterknoten anzugeben, oder dafür verwendet werden, Identifikation der Unterknoten anzugeben, wobei die Identifikation dafür verwendet wird, zu bestimmen, welche unter dem Masterknoten oder den Unterknoten Nutzer der Kanalressource sind, die den Kanalzuteilungsinformationen entspricht, um die Kommunikation zwischen dem Masterknoten und den Unterknoten oder zwischen den Unterknoten auf der Kanalressource durchzuführen;
wobei die Kanalzugriffs-Backoff-Richtlinie mindestens eines aus den Folgenden umfasst: Backoff-Zeiteinstellung, Konfliktzugriffsfenstereinstellung.

2. Verfahren nach Anspruch 1, wobei der Zugriffsparameter weiter umfasst:
Prioritäten von Nutzern, die der Kanalressource entsprechen.

3. Verfahren nach Anspruch 2, weiter umfassend:
Durchführen eines Zugriffsprozesses durch Übernehmen von unterschiedlicher Backoff-Zeit gemäß den Prioritäten der Nutzer, die der Kanalressource entsprechen.

4. Verfahren nach Anspruch 3, wobei das Durchführen des Zugriffsprozesses durch Übernehmen von unterschiedlicher Backoff-Zeit gemäß der Priorität der Nutzer, die der Kanalressource entsprechen, umfasst:
Durchführen, unter den Nutzern, die der Kanalressource entsprechen, des Zugriffsprozesses durch Übernehmen einer ersten Backoff-Zeit für Benutzer mit einer höchsten Priorität, und Durchführen des Zugriffsprozesses durch Übernehmen einer zweiten Backoff-Zeit für Nutzer mit einer anderen Priorität als der höchsten Priorität, wobei die zweite Backoff-Zeit nicht kleiner ist als die erste Backoff-Zeit.

5. Verfahren nach Anspruch 2,
wobei der Frequenzbandtyp mindestens eines aus den Folgenden umfasst: das erste Frequenzband der Kanalressource, ein zweites Frequenzband der Kanalressource, ein drittes Frequenzband der Kanalressource;
wobei das erste Frequenzband ein Hauptfrequenzband in Betriebsfrequenzbändern des drahtlosen Netzwerks ist, das zweite Frequenzband ein Hilfsfrequenzband in den Betriebsfrequenzbändern des drahtlosen Netzwerks ist; und
wobei das dritte Frequenzband ein anderes als die Betriebsfrequenzbänder des drahtlosen Netzwerks ist.

6. Verfahren nach Anspruch 5, weiter umfassend:
falls der Frequenzbandtyp das erste Frequenzband ist, Durchführen eines Zugriffsprozesses durch den Masterknoten oder die Unterknoten auf die Kanalressource durch Übernehmen einer dritten Backoff-Zeit; falls der Frequenzbandtyp das zweite Frequenzband ist, Durchführen eines Zugriffsprozesses durch den Masterknoten oder die Unterknoten auf die Kanalressource durch Übernehmen einer vierten Backoff-Zeit, wobei die vierte Backoff-Zeit nicht kleiner ist als die dritte Backoff-Zeit.

7. Verfahren nach Anspruch 6, weiter umfassend:
falls der Frequenzbandtyp das dritte Frequenzband ist, Durchführen des Zugriffsprozesses durch den Masterknoten oder die Unterknoten auf die Kanalressource durch Übernehmen einer fünften Backoff-Zeit, wobei die fünfte Backoff-Zeit nicht kleiner ist als die vierte Backoff-Zeit.

8. Verfahren zur Kommunikation in einem drahtlosen Netzwerk, umfassend:
Empfangen, durch Unterknoten des drahtlosen Netzwerks, von Kanalzuteilungsinformationen von einem Masterknoten auf einem ersten Frequenzband, wobei die Kanalzuteilungsinformationen dafür verwendet werden, eine Kanalressource anzugeben, die für Kommunikation zwischen dem Masterknoten und den Unterknoten oder zwischen den Unterknoten benötigt wird, die Kanalzuteilungsinformationen einen Zugriffsparameter übermitteln, und der Zugriffsparameter dafür verwendet wird, eine Kanalzugriffs-Backoff-Richtlinie der Kanalressource anzugeben (S402);
Durchführen der Kommunikation durch die Unterknoten gemäß der von den Kanalzuteilungsinformationen angegebenen Kanalressource (S404);
der Zugriffsparameter ebenfalls einen Frequenzbandtyp der Kanalressource umfasst,
die Kanalzuteilungsinformationen weiter dafür verwendet werden, Identifikation des Masterknotens und der Unterknoten anzugeben, oder dafür verwendet werden, Identifikation der Unterknoten anzugeben, wobei die Identifikation dafür verwendet wird, zu bestimmen, welche unter dem Masterknoten oder den Unterknoten Nutzer der Kanalressource sind, die den Kanalzuteilungsinformationen entspricht, um die Kommunikation zwischen dem Masterknoten und den Unterknoten oder zwischen den Unterknoten auf der Kanalressource durchzuführen;
wobei die Kanalzugriffs-Backoff-Richtlinie mindestens eines aus den Folgenden umfasst: Backoff-Zeiteinstellung, Konfliktzugriffsfenstereinstellung.

9. Verfahren nach Anspruch 8, wobei der Zugriffsparameter weiter umfasst:
Priorität von Nutzern, die der Kanalressource entsprechen.

10. Vorrichtung zur Kommunikationsverarbeitung in einem drahtlosen Netzwerk, die auf einen Masterknoten des drahtlosen Netzwerks angewendet wird, umfassend:
eine Erfassungskomponente (52), die dazu konfiguriert ist, Kanalzuteilungsinformationen zu erfassen, wobei die Kanalzuteilungsinformationen dafür verwendet werden, eine Kanalressource anzugeben, die für Kommunikation zwischen dem Masterknoten und Unterknoten oder zwischen den Unterknoten benötigt wird, und die Kanalzuteilungsinformationen einen Zugriffsparameter übermitteln, der dafür verwendet wird, eine Kanalzugriffs-Backoff-Richtlinie der Kanalressource anzugeben (S302); und
eine Sendekomponente (54), die dazu konfiguriert ist, die Kanalzuteilungsinformationen an die Unterknoten auf einem ersten Frequenzband zu senden (S304);
der Zugriffsparameter ebenfalls einen Frequenzbandtyp der Kanalressource umfasst;
die Kanalzuteilungsinformationen weiter dafür verwendet werden, Identifikation des Masterknotens und der Unterknoten anzugeben, oder dafür verwendet werden, Identifikation der Unterknoten anzugeben, wobei die Identifikation dafür verwendet wird, zu bestimmen, welche unter dem Masterknoten oder den Unterknoten Nutzer der Kanalressource sind, die den Kanalzuteilungsinformationen entspricht, um die Kommunikation zwischen dem Masterknoten und den Unterknoten oder zwischen den Unterknoten auf der Kanalressource durchzuführen;
wobei die Kanalzugriffs-Backoff-Richtlinie mindestens eines aus den Folgenden umfasst: Backoff-Zeiteinstellung, Konfliktzugriffsfenstereinstellung.

11. Vorrichtung nach Anspruch 10, wobei die Erfassungskomponente (52) dazu konfiguriert ist, die Kanalzuteilungsinformationen zu erfassen, falls der Zugriffsparameter weiter umfasst:
Priorität von Nutzern, die der Kanalressource entsprechen.

12. Kommunikationsvorrichtung für ein drahtloses Netzwerk, die auf Unterknoten des drahtlosen Netzwerks angewendet wird, umfassend:
eine Empfangskomponente (62), die dazu konfiguriert ist, Kanalzuteilungsinformationen von einem Masterknoten auf einem ersten Frequenzband zu empfangen, wobei die Kanalzuteilungsinformationen dafür verwendet werden, eine Kanalressource anzugeben, die für Kommunikation zwischen dem Masterknoten und den Unterknoten oder zwischen den Unterknoten benötigt wird, die Kanalzuteilungsinformationen einen Zugriffsparameter übermitteln, der dafür verwendet wird, eine Kanalzugriffs-Backoff-Richtlinie der Kanalressource anzugeben (S402);
eine Kommunikationskomponente (64), die dazu konfiguriert ist, die Kommunikation gemäß der von den Kanalzuteilungsinformationen angegebenen Kanalressource durchzuführen (S404);
der Zugriffsparameter ebenfalls einen Frequenzbandtyp der Kanalressource umfasst;
die Kanalzuteilungsinformationen weiter dafür verwendet werden, Identifikation des Masterknotens und der Unterknoten anzugeben, oder dafür verwendet werden, Identifikation der Unterknoten anzugeben, wobei die Identifikation dafür verwendet wird, zu bestimmen, welche unter dem Masterknoten oder den Unterknoten Nutzer der Kanalressource sind, die den Kanalzuteilungsinformationen entspricht, um die Kommunikation zwischen dem Masterknoten und den Unterknoten oder zwischen den Unterknoten auf der Kanalressource durchzuführen;
wobei die Kanalzugriffs-Backoff-Richtlinie mindestens eines aus den Folgenden umfasst: Backoff-Zeiteinstellung, Konfliktzugriffsfenstereinstellung.

13. Vorrichtung nach Anspruch 12, wobei die Empfangskomponente (62) dazu konfiguriert ist, die Kanalzuteilungsinformationen zu empfangen, falls der Zugriffsparameter weiter umfasst:
Priorität von Nutzern, die der Kanalressource entsprechen.

## Revendications

1. Procédé de traitement de communications dans un réseau sans fil comprenant :
l'acquisition, par un noeud maître du réseau sans fil, d'informations d'allocation de canal, dans lequel les informations d'allocation de canal sont utilisées pour indiquer une ressource de canal nécessaire pour une communication entre le noeud maître et des sous-noeuds ou entre des sous-noeuds, les informations d'allocation de canal transportent un paramètre d'accès, et le paramètre d'accès est utilisé pour indiquer une politique de délai d'attente d'accès au canal de la ressource de canal (S302) ; et
la transmission, par le noeud maître, des informations d'allocation de canal aux sous-noeuds sur une première bande de fréquences (S304) ;
le paramètre d'accès comprend également un type de bande de fréquences de la ressource de canal ;
les informations d'allocation de canal sont utilisées en outre pour indiquer une identification du noeud maître et des sous-noeuds, ou utilisées pour indiquer une identification des sous-noeuds, dans lequel l'identification est utilisée pour déterminer lequel entre le noeud maître ou les sous-noeuds est utilisateur de la ressource de canal correspondant aux informations d'allocation de canal de manière à effectuer la communication entre le noeud maître et les sous-noeuds ou entre les sous-noeuds sur la ressource de canal ;
dans lequel la politique de délai d'attente d'accès au canal comprend au moins un de ce qui suit : un réglage de temps de délai d'attente, un réglage de fenêtre d'accès de contention.

2. Procédé selon la revendication 1, dans lequel le paramètre d'accès comprend en outre :
des priorités d'utilisateurs correspondant à la ressource de canal.

3. Procédé selon la revendication 2, comprenant en outre :
l'exécution d'un processus d'accès en adoptant un temps de délai d'attente différent en fonction des priorités des utilisateurs correspondant à la ressource de canal.

4. Procédé selon la revendication 3, dans lequel l'exécution du processus d'accès en adoptant un temps de délai d'attente différent en fonction de la priorité des utilisateurs correspondant à la ressource de canal comprend :
parmi les utilisateurs correspondant à la ressource de canal, l'exécution du processus d'accès en adoptant un premier temps de délai d'attente pour des utilisateurs avec une priorité la plus élevée et l'exécution du processus d'accès en adoptant un deuxième temps de délai d'attente pour des utilisateurs avec une priorité autre que la priorité la plus élevée, dans lequel le deuxième temps de délai d'attente n'est pas inférieur au premier temps de délai d'attente.

5. Procédé selon la revendication 2,
dans lequel le type de bande de fréquences comprend au moins une de ce qui suit : la première bande de fréquences de la ressource de canal, une deuxième bande de fréquences de la ressource de canal, une troisième bande de fréquences de la ressource de canal ;
dans lequel la première bande de fréquences est une bande de fréquences principale dans des bandes de fréquences de fonctionnement du réseau sans fil, la deuxième bande de fréquences est une bande de fréquences auxiliaire dans les bandes de fréquences de fonctionnement du réseau sans fil ; et
dans lequel la troisième bande de fréquences est une différente des bandes de fréquences de fonctionnement du réseau sans fil.

6. Procédé selon la revendication 5, comprenant en outre :
dans un cas où le type de bande de fréquences est la première bande de fréquences, l'exécution d'un processus d'accès, par le noeud maître ou les sous-noeuds, sur la ressource de canal en adoptant un troisième temps de délai d'attente ; dans un cas où le type de bande de fréquences est la deuxième bande de fréquences, l'exécution d'un processus d'accès, par le noeud maître ou les sous-noeuds, sur la ressource de canal en adoptant un quatrième temps de délai d'attente, dans lequel le quatrième temps de délai d'attente n'est pas inférieur au troisième temps de délai d'attente.

7. Procédé selon la revendication 6, comprenant en outre :
dans un cas où le type de bande de fréquences est la troisième bande de fréquences, l'exécution du processus d'accès, par le noeud maître ou les sous-noeuds, sur la ressource de canal en adoptant un cinquième temps de délai d'attente, dans lequel le cinquième temps de délai d'attente n'est pas inférieur au quatrième temps de délai d'attente.

8. Procédé pour la communication dans un réseau sans fil, comprenant :
la réception, par des sous-noeuds du réseau sans fil, d'informations d'allocation de canal à partir d'un noeud maître sur une première bande de fréquences, dans lequel les informations d'allocation de canal sont utilisées pour indiquer une ressource de canal nécessaire pour une communication entre le noeud maître et les sous-noeuds ou entre les sous-noeuds, les informations d'allocation de canal transportent un paramètre d'accès, et le paramètre d'accès est utilisé pour indiquer une politique de délai d'attente d'accès au canal de la ressource de canal (S402) ;
l'exécution de la communication, par les sous-noeuds, en fonction de la ressource de canal indiquée par les informations d'allocation de canal (S404) ;
le paramètre d'accès comprend également un type de bande de fréquences de la ressource de canal
les informations d'allocation de canal sont utilisées en outre pour indiquer une identification du noeud maître et des sous-noeuds, ou utilisées pour indiquer une identification des sous-noeuds, dans lequel l'identification est utilisée pour déterminer lequel entre le noeud maître ou les sous-noeuds est utilisateur de la ressource de canal correspondant aux informations d'allocation de canal de manière à effectuer la communication entre le noeud maître et les sous-noeuds ou entre les sous-noeuds sur la ressource de canal ;
dans lequel la politique de délai d'attente d'accès au canal comprend au moins un de ce qui suit : un réglage de temps de délai d'attente, un réglage de fenêtre d'accès de contention.

9. Procédé selon la revendication 8, dans lequel le paramètre d'accès comprend en outre :
une priorité d'utilisateurs correspondant à la ressource de canal.

10. Appareil de traitement de communication dans un réseau sans fil, qui est appliqué à un noeud maître du réseau sans fil, comprenant :
un composant d'acquisition (52) qui est configuré pour acquérir des informations d'allocation de canal, dans lequel les informations d'allocation de canal sont utilisées pour indiquer une ressource de canal nécessaire pour une communication entre le noeud maître et des sous-noeuds ou entre les sous-noeuds, et les informations d'allocation de canal transportent un paramètre d'accès utilisé pour indiquer une politique de délai d'attente d'accès au canal de la ressource de canal (S302) ; et
un composant de transmission (54) qui est configuré pour transmettre les informations d'allocation de canal aux sous-noeuds sur une première bande de fréquences (S304) ;
le paramètre d'accès comprend également un type de bande de fréquences de la ressource de canal ;
les informations d'allocation de canal sont utilisées en outre pour indiquer une identification du noeud maître et des sous-noeuds, ou utilisées pour indiquer une identification des sous-noeuds, dans lequel l'identification est utilisée pour déterminer lequel entre le noeud maître ou les sous-noeuds est utilisateur de la ressource de canal correspondant aux informations d'allocation de canal de manière à effectuer la communication entre le noeud maître et les sous-noeuds ou entre les sous-noeuds sur la ressource de canal ;
dans lequel la politique de délai d'attente d'accès au canal comprend au moins un de ce qui suit : un réglage de temps de délai d'attente, un réglage de fenêtre d'accès de contention.

11. Appareil selon la revendication 10, dans lequel le composant d'acquisition (52) est configuré pour acquérir les informations d'allocation de canal dans un cas où le paramètre d'accès comprend en outre :
une priorité d'utilisateurs correspondant à la ressource de canal.

12. Appareil de communication pour un réseau sans fil, qui est appliqué à des sous-noeuds du réseau sans fil, comprenant :
un composant de réception (62) qui est configuré pour recevoir des informations d'allocation de canal à partir d'un noeud maître sur une première bande de fréquences, dans lequel les informations d'allocation de canal sont utilisées pour indiquer une ressource de canal nécessaire pour une communication entre le noeud maître et les sous-noeuds ou entre les sous-noeuds, les informations d'allocation de canal transportent un paramètre d'accès utilisé pour indiquer une politique de délai d'attente d'accès au canal de la ressource de canal (S402) ;
un composant de communication (64) qui est configuré pour exécuter la communication en fonction de la ressource de canal indiquée par les informations d'allocation de canal (S404) ;
le paramètre d'accès comprend également un type de bande de fréquences de la ressource de canal ;
les informations d'allocation de canal sont utilisées en outre pour indiquer une identification du noeud maître et des sous-noeuds, ou utilisées pour indiquer une identification des sous-noeuds, dans lequel l'identification est utilisée pour déterminer lequel entre le noeud maître ou les sous-noeuds est utilisateur de la ressource de canal correspondant aux informations d'allocation de canal de manière à effectuer la communication entre le noeud maître et les sous-noeuds ou entre les sous-noeuds sur la ressource de canal ;
dans lequel la politique de délai d'attente d'accès au canal comprend au moins un de ce qui suit : un réglage de temps de délai d'attente, un réglage de fenêtre d'accès de contention.

13. Appareil selon la revendication 12, dans lequel le composant de réception (62) est configuré pour recevoir les informations d'allocation de canal dans un cas où le paramètre d'accès comprend en outre :
une priorité d'utilisateurs correspondant à la ressource de canal.
